Europäisches Patentamt

European Patent Office

Office européen des brevets

(11) Veröffentlichungsnummer: **0 370 119 B1**

# (12) EUROPÄISCHE PATENTSCHRIFT

(45) Veröffentlichungstag der Patentschrift:
28.08.91 Patentblatt 91/35

(51) Int. Cl.⁵: **F16D 41/07**

(21) Anmeldenummer: **88119278.5**

(22) Anmeldetag: **19.11.88**

(54) **Doppelkäfig-Freilauf mit rastender Axialfixierung durch axiale Fortsätze an einem Kunststoff-Aussenkäfigring.**

(43) Veröffentlichungstag der Anmeldung:
30.05.90 Patentblatt 90/22

(45) Bekanntmachung des Hinweises auf die
Patenterteilung:
28.08.91 Patentblatt 91/35

(84) Benannte Vertragsstaaten:
DE FR GB IT NL SE

(56) Entgegenhaltungen:
EP-A- 0 240 847
EP-A- 0 291 550
FR-A- 1 577 157
FR-A- 2 305 640
FR-A- 2 320 461
US-A- 3 388 779
US-A- 3 784 268

(56) Entgegenhaltungen:
US-A- 4 054 340
US-A- 4 076 108
US-A- 4 185 724
US-A- 4 679 676
US-A- 4 712 661
US-E- 29 985

(73) Patentinhaber: Borg-Warner Automotive
GmbH
Kurpfalzring
W-6900 Heidelberg 1 (DE)

(72) Erfinder: Leitz, Hermann
Mühltalstr. 122 a
W-6900 Heidelberg (DE)

(74) Vertreter: Meyer-Roedern, Giso, Dr.
Bergheimer Strasse 10-12
W-6900 Heidelberg 1 (DE)

## Beschreibung

Die Erfindung betrifft einen Klemmkörperfreilauf mit einem Doppelkäfig, zu dem ein Innenkäfigring vorzugsweise aus Metall, insbesondere Stahl, und ein Außenkäfigring aus Kunststoff gehört, an den elastisch verformbare Rastmittel zum axial gesicherten Einbau des Freilaufs in einen den Außenkäfigring umgebenden Außenring einstückig angeformt sind.

Ein derartiger Freilauf gehört nach der EP-A-0291550, veröffentlich am 23.11.88, zum Stand der Technik. Zur Axialfixierung des Doppelkäfigs sind am Außenmantel des Außenkäfigrings eine Anzahl Nocken vorgesehen, die in eine am Außenring des Freilaufs angebrachte Ringnut eingreifen.

Nachteilig bei dieser Anordnung ist der hohe Fertigungsaufwand, der mit der Herstellung der Ringnut einhergeht, insbesondere wenn es sich bei dem Außenring um ein gehärtetes Teil handelt.

Die US-A-4679676 beschreibt einen Rollenfreilauf, dessen Rollenkäfig aus mehreren Einzelteilen von beiden Seiten an einen Außenring angebaut wird. Eine Schnappmontage ist dabei nicht verwirklicht.

Bei der US-A-4712661 wird ein Rollenkäfig in einem Außenring durch Verdrehen nach Art eines Bajonettverschlusses fixiert. Eine derartige Montage kommt für einen Klemmkörperfreilauf mit Doppelkäfig nicht in Betracht, da der zum Durchschieben des Käfigs erforderliche Platz im Bereich der Klemmrampen nur bei einem Rollenfreilauf zur Verfügung steht.

Aufgabe der Erfindung ist es, einen herstellungs- und montagetechnisch unaufwendigen und kostengünstigen Freilauf der eingangs genannten Art zu schaffen.

Diese Aufgabe wird mit einem derartigen Freilauf dadurch gelöst, daß an den beiden stirnflächen des Außenkäfigrings axial über den Außenring vorstehende, wenigstens zum Teil als Rastelement ausgelegte Fortsätze mit an den Enden radial nach außen angeformten Nocken angebracht sind, so daß ein Einpressen des Doppelkäfigs in den Außenring unter elastischer Verformung des Kunststoff-Außenkäfigrings mit Auslenkung der als Rastelement ausgelegten Fortsätze nach innen möglich ist.

Derartige Fortsätze können an einen Außenkäfigring aus Kunststoff ohne weiteres einstückig angeformt werden. Sie werden dank der Elastizität des Kunststoffmaterials beim Einbau des Doppelkäfigs in den Außenring radial nach innen ausgelenkt, um bei Erreichen der zu sichernden Endstellung des Doppelkäfigs nach außen zu federn und sich mit den Nocken gegen die Stirnflächen des Außenrings zu legen. Der Doppelkäfig ist dadurch einwandfrei axial gesichert, ohne daß es einer besonderen Formgebung des Außenrings bedarf.

In einer bevorzugten Ausführungsform haben die Fortsätze auf der einen Seite des Außenkäfigrings eine geringere radiale Höhe als diejenigen auf der Gegenseite, so daß beim Einpressen des Doppelkäfigs in den Außenring die radial niedrigen Fortsätze nach innen ausgelenkt werden, während die radial höheren Fortsätze einen axialen Anschlag bilden. Es ist so eine Steckmontage des Doppelkäfigs mit den als Rastelementen wirkenden radial niedrigen Fortsätzen voran möglich. Die radial höheren Fortsätze an der Gegenseite sind aus Stabilitätsgründen bevorzugt.

Die radial niedrigen Fortsätze können mit einer Anlaufschräge und/oder der Innenmantel des Außenrings einsteckseitig mit einer Fase versehen sein. Die Zentrierung des Doppelkäfigs beim Einbau wird so vereinfacht und die Steckmontage erleichtert.

Vorzugsweise sind die Fortsätze auf beiden Seiten des Außenkäfigrings in Umfangsrichtung versetzt. Diese Anordnung ist aus Stabilitätsgründen bevorzugt.

Axial abstehende Rastelemente an den Stirnseiten des Außenkäfigrings kommen auch für Klemmkörperfreiläufe in Betracht, bei denen auf einer oder beiden Seiten des Doppelkäfigs eine Seitenscheibe insbesondere mit der Funktion einer Lagerscheibe und/oder Öldämmscheibe angebracht ist. Die Seitenscheibe ist dann mit Ausnehmungen zu versehen, durch die die Rastelemente hindurchragen.

Die Seitenscheibe kann durch eine einstückig mit dem Außenkäfigring ausgebildete Haltestruktur rastend in axialer Richtung gehalten sein. Die Kuntstofftechnik ermöglicht es, die Haltestruktur für die Seitenscheibe zugleich mit den zur axialen Fixierung des Doppelkäfigs dienenden Rastelementen in unaufwendiger Weise an den Außenkäfigring anzuformen.

Als Haltestruktur für die Seitenscheibe kommen an die Fortsätze angeformte, vorzugsweise zungenförmige Halteelemente in Betracht, die mitsamt den Fortsätzen durch die Ausnehmungen in der Seitenscheibe passen und an der Seitenscheibe rasten. Die Halteelemente können dabei sowohl nach radial innen, als auch in Umfangsrichtung von den Fortsätzen wegfedern und sowohl axial außen, als auch durch Einschnitte abgeteilt axial innen an den Fortsätzen ansetzen.

In einer alternativen Ausführungsform sind als Haltestruktur für die Seitenscheibe vorzugsweise zungenförmige Halteelemente separat von den zur Axialfixierung des Doppelkäfigs dienenden Fortsätzen an den Außenkäfigring angeformt. Die Halteelemente greifen dann durch ihnen eigens zugeordnete Durchbrüche der Seitenscheibe hindurch, um an ihr einzurasten.

In einer weiteren Variante ist als Haltestruktur für die Seitenscheibe ein an der Stirnseite des Außenkäfigrings umlaufender, nabenartiger Wulst vorgesehen, der für den Durchtritt der zur Axialfixierung des Doppelkäfigs dienenden Fortsätze unterbrochen ist. Die Seitenscheibe kann mehrere, vorzugsweise gleichmäßig über ihren Umfang verteilte Sicken aufweisen, die hinter dem Wulst einrasten und die Seitenscheibe dadurch axial fixieren.

In den Außenkäfigring können über dessen Außenmantel vorstehende Clips aus Metall eingebettet sein. Derartige Clips gewährleisten eine reibschlüssige Verbindung zwischen dem Außenkäfigring und dem Außenring durch die bei geringem Verschleiß auf Dauer ein guter Abbremseffekt erzielt wird.

Vorzugsweise sind die Clips axial einseitig an dem Außenkäfigring verankert, wärend sie axial anderseitig lose am Außenmantel des Außenkäfigrings abgestützt sein können. Die einseitige axiale Verankerung läßt den Clips ein für den Abbremseffekt günstiges Bewegungsspiel. Außerdem ist ein einfaches Kalibrieren der Clips nach erfolgtem Einspritzen möglich.

Die Clips können Teil eines über den Umfang des Außenkäfigrings durchgehend darin eingebetteten Clipsbands sein. Diese Bauform hat fertigungstechnische Vorteile. Es wird auf einfache Weise eine präzise Positionierung und Ausrichtung der Clips erreicht.

Es ist aber auch ein Einspritzen einzelner Clips in den Außenkäfigring möglich. Letztere werden vorzugeweise ebenfalls als Bandmaterial gefertigt und vor dem Einspritzen vom Band geschnitten. Diese Ausführungsform ist materialsparend und deshalb insbesondere für Freiläufe mit nur wenigen über den Umfang verteilten Clips bevorzugt.

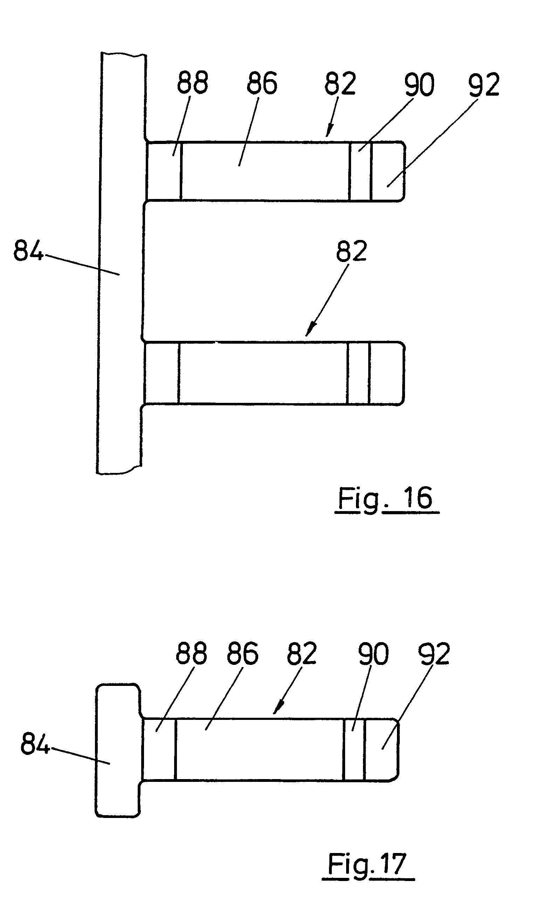

Die Erfindung wird im folgenden anhand von in der Zeichnung dargestellten Ausführungsbeispielen näher erläutert. Abgesehen von Fig. 16 und 17 zeigen die Abbildungen mit ungerader Nummer jeweils den Doppelkäfig eines Klemmkörperfreilaufs in einem Außenring axial fixiert, wobei die dazu dienenden Rastelemente in Umfangsrichtung versetzt gezeichnet sind. In den Abbildungen mit gerader Nummer ist der Doppelkäfig allein dargestellt. Im einzelnen zeigen :

| Fig. 1 | den Radialschnitt eines ersten Doppelkäfig-Klemmkörperfreilaufs ; |
| Fig. 2 | links eine Seitenansicht des zugehörigen Doppelkäfigs mit Blick in Richtung IIA von Fig. 1, und rechts einen Schnitt nach IIB-IIB von Fig. 1 ; |
| Fig. 3 | den Radialschnitt eines zweiten Doppelkäfig-Klemmkörperfreilaufs ; |
| Fig. 4 | eine radiale Draufsicht auf den zugehörigen Doppelkäfig mit Blick in Richtung IV von Fig. 3 ; |
| Fig. 5 | den Radialschnitt eines dritten Doppelkäfig-Klemmkörperfreilaufs ; |
| Fig. 6 | eine radiale Draufsicht auf den zugehörigen Doppelkäfig mit Blick in Richtung VI von Fig. 5 ; |
| Fig. 7 | den Radialschnitt eines vierten Doppelkäfig-Klemmkörperfreilaufs ; |
| Fig. 8 | eine radiale Draufsicht auf den zugehörigen Doppelkäfig mit Blick in Richtung VIII von Fig. 7 ; |
| Fig. 9 | den Radialschnitt eines fünften Doppelkäfig-Klemmkörperfreilaufs ; |
| Fig. 10 | eine Seitenansicht des zugehörigen Doppelkäfigs mit Blick in Richtung X von Fig. 9 ; |
| Fig. 11 | den Radialschnitt eines sechsten Doppelkäfig-Klemmkörperfreilaufs ; |
| Fig. 12 | eine radiale Draufsicht auf den zugehörigen Doppelkäfig mit Blick in XII von Fig. 11 ; |
| Fig. 13 | den Radialschnitt eines siebten Doppelkäfig-Klemmkörperfreilaufs nach XIII-XIII von Fig. 14 ; |
| Fig. 14 | eine Seitenansicht des zugehörigen Doppelkäfigs mit Blick in Richtung XIV von Fig. 13. |
| Fig. 15 | den Radialschnitt eines achten Doppelkäfig-Klemmkörperfreilaufs mit in den Außenkäfigring eingebetteten Clips ; |
| Fig. 16 | die Mantelabwicklung eines zugehörigen Clipsbands ; und |
| Fig. 17 | die entsprechende Darstellung eines einzelnen Clips. |

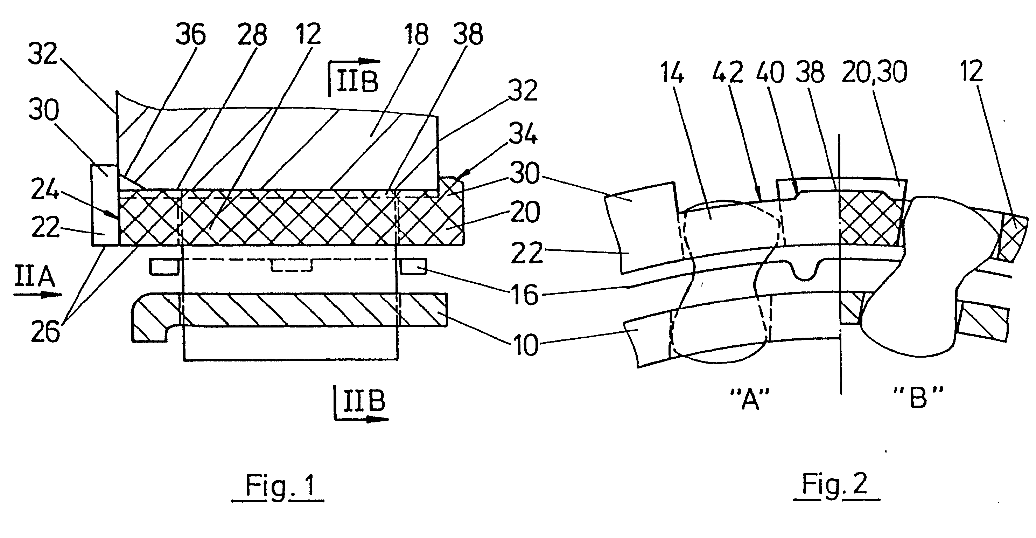

Der in Fig. 1 und 2 gezeigte Klemmkörperfreilauf mit Doppelkäfig hat einen Innenkäfigring 10 aus Metall, insbesondere Stahl, und einen Außenkäfigring 12 aus Kunststoff. In Ausnehmungen des Innenkäfigrings und Außenkäfigrings sind über deren Umfang verteilt eine Anzahl Klemmkörper 14 aufgenommen und durch eine zwischen den Ringen liegende gemeinsame Feder 16 in Klemmrichtung angefedert. Der Doppelkäfig mit Klemmkörpern 14 und Feder 16 ist eine vorgefertigte Einheit, die in einen den Außenkäfigring 12 außen umgebenden Freilaufaußenring 18 eingebaut wird. Dabei ist eine Schnappverbindung zwischen Außenkäfigring 12 und Außenring 18 vorgesehen, durch die der Doppelkäfig in dem Außenring 18 axial fixiert ist.

Zur Herstellung der Schnappverbindung sind an den beiden Stirnseiten des Außenkäfigrings eine Anzahl Fortsätze 20, 22 angeformt, die axial über den Außenring 18 vorstehen. Die Fortsätze 20, 22 sind in Kunststofftechnik einstückig mit dem Außenkäfigring 12 ausgebildet. Es handelt sich um kurze, auf die Stirnflächen 24 des Außenkäfigrings 12 aufgesetzte Ringsegmente, die am Innenmantel 26 bündig mit dem Außenkäfigring 12 abschließen und über dessen Außenmantel 28 radial nach außen vorstehen. Dadurch sind Nocken 30 gebildet, die an den Stirnseiten 32 des Außenrings 18 anliegen und den Außenkäfigring 12 in dem Außenring 18 axial fixieren.

Die Fortsätze 20, 22 sind jeweils gleichmäßig über den Umfang des Außenkäfigrings 12 verteilt. In Fig. 1 sind die Fortsätze auf einer Seite des Außenkäfigrings 12 in Umfangsrichtung versetzt gezeichnet, als ob die Fortsätze 20, 22 in axialer Flucht lägen. Wie man Fig. 2 entnimmt, sind aber tatsächlich die Fortsätze 20 auf der einen Seite des Außenkäfigrings 12 zu denen auf der anderen Seite des Außenkäfigrings 12 in Umfangsrichtung versetzt.

Die Fortsätze 20 auf der in Fig. 1 rechten Seite des Außenkäfigrings 12 haben eine geringere radiale Höhe, als diejenigen 22 auf der Gegenseite. Am Außenring der radial niedrigen Fortsätze 20 ist eine Fase 34 vorgesehen. Der Freilaufaußenring 18 weist auf der Gegenseite, die die Einsteckseite für den Doppelkäfig darstellt, am Innenring eine konische Erweiterung 36 auf, die eine Anlaufschräge für die Fortsätze 20 darstellt. Der Konuswinkel der Erweiterung 36 entspricht dem der Fase 34. Die radial höheren Fortsätze 22 sind so dimensioniert, daß sie radial außen deutlich über die Erweiterung 36 hinausstehen.

Bei der Steckmontage wird der Doppelkäfig mit den radial niedrigen Fortsätze 20 voran in die konische Erweiterung 36 des Freilaufaußenrings 18 eingesetzt und zentriert. Man preßt dann den Doppelkäfig in den Außenring 18 ein, wobei die Fortsätze 20 radial nach innen gedrückt und der aus Kunststoff bestehende Außenkäfigring 12 elastisch verformt wird. Am Ende der Einsteckbewegung erreichen die radial höheren Fortsätze 22 ihre Anschlagstellung an der einsteckseitigen Stirnseite 32 des Außenrings 18, worauf die als Rastelemente dienenden radial niedrigen Fortsätze 22 ausfedern und sich an der gegenüberliegenden Stirnseite 32 anlegen.

Auf dem Außenmantel des Außenkäfigrings 12 sind in Umfangsrichtung versetzt eine Anzahl axialer Stege 38 einstückig angeformt. Die Stege 38 gehen mit Rampenflächen 40 in den Zylindermantel 42 des Außenkäfigrings 12 über. Sie dienen zur reibschlüssigen Verspannung des Außenkäfigrings 12 mit dem Freilaufaußenring 18.

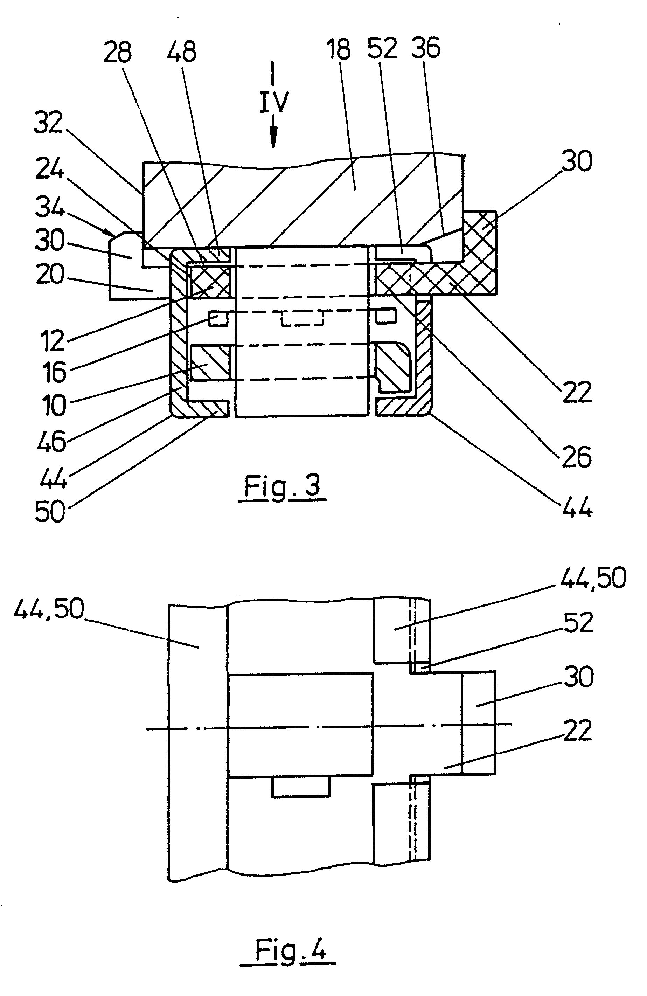

Bei dem in Fig. 3 und 4 gezeigten Klemmkörperfreilauf sind an beiden Stirnseiten des Doppelkäfigs Seitenscheiben 44 angeordnet, die als Lagerscheiben oder Stützringe dienen und/oder die Funktion von Öldämmscheiben erfüllen können. Die Seitenscheiben 44 haben ein U-förmiges Ringprofil. Sie sind mit axial außen liegendem Boden 46 und einander zugewandter Öffnung an den Doppelkäfig angebaut, wobei ihr äußerer Ringsteg 48 den Außenkäfigring 12 und ihr innerer Ringsteg 50 den Innenkäfigring 10 umschließt. Die Seitenscheiben 44 kommen in der Montageöffnung des Freilaufaußenrings 18 versenkt zu liegen.

An den Außenkäfigring 12 sind in Kunststofftechnik axial abstehende, zungenartige Fortsätze 20, 22 angeformt, die wie bei dem zuvor beschriebenen Ausführungsbeispiel zur Verrastung des Doppelkäfigs an dem Außenring 18 dienen. Die Fortsätze 20, 22 ragen durch Ausnehmungen 52 in den Seitenscheiben 44 hindurch, und sie legen sich mit radial außen abstehenden Nocken 30 an die Stirnseiten 32 des Außenrings 18 an. Wie bei dem zuvor beschriebenen Ausführungsbeispiel sind die Fortsätze 20 auf der einen Seite des Doppelkäfigs radial niedriger und als Rastelement ausgebildet, während die radial höheren Fortsätze 22 auf der Gegenseite bei der Steckmontage als Anschlag dienen. Die Ausnehmungen 52 in den Seitenscheiben 44 unterbrechen den äußeren Ringsteg 48, und sie erstrecken sich in den Boden 46 hinein.

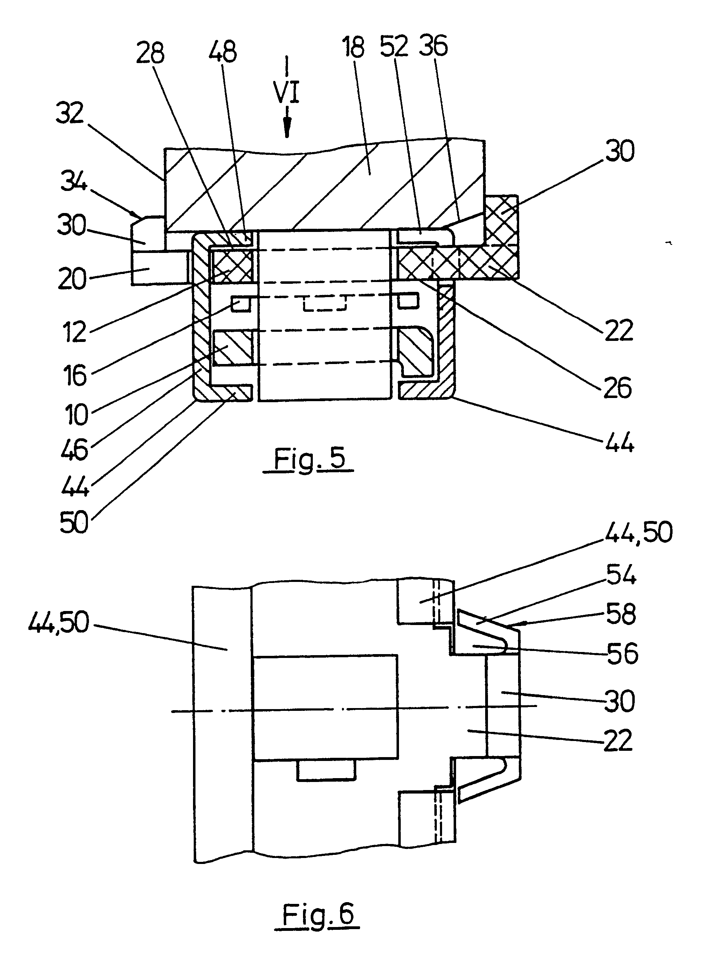

Bei den in Fig. 5 bis 14 dargestellten Ausführungsbeispielen sind die Seitenscheiben 44 durch Haltestrukturen rastend in axialer Richtung fixiert, die ebenso wie die Fortsätze 20, 22 einstückig in Kunststofftechnik an den Außenkäfigring 12 angeformt sind. In Fig. 5 und 6 erkennt man insofern an die Fortsätze 20, 22 angeformte Zungen 54, die in Umfangsrichtung schräg nach außen zu beiden Seiten von den Enden der Fortsätze 20, 22 abgehen. Der Ansatz der Zungen 54 ist von den Seitenscheiben 44 axial beabstandet. Im entspannten Zustand (vgl. Fig. 6) sind die Zungen 54 von den Fortsätzen 20, 22 weggespreizt, so daß ihre Enden den Seitenscheiben 44 als axiale Sperre gegenüberliegen. Der mit den Fortsätzen 20, 22 eingeschlossene Winkel 56 ermöglicht ein Einfedern der Zungen 54 aufeinander zu.

Bei der Montage einer Seitenscheibe 44 werden die Fortsätze 20, 22 mit den Zungen 54 durch die Ausnehmungen 52 hindurchgesteckt. Dabei treffen die schrägen Flanken 58 der Zungen 54 auf den Rand der Ausnehmungen 52, wodurch die Zungen 54 elastisch verschwenkt werden und nach Passieren der Ausnehmung 52 vor den Boden 46 der Seitenscheibe 44 federn.

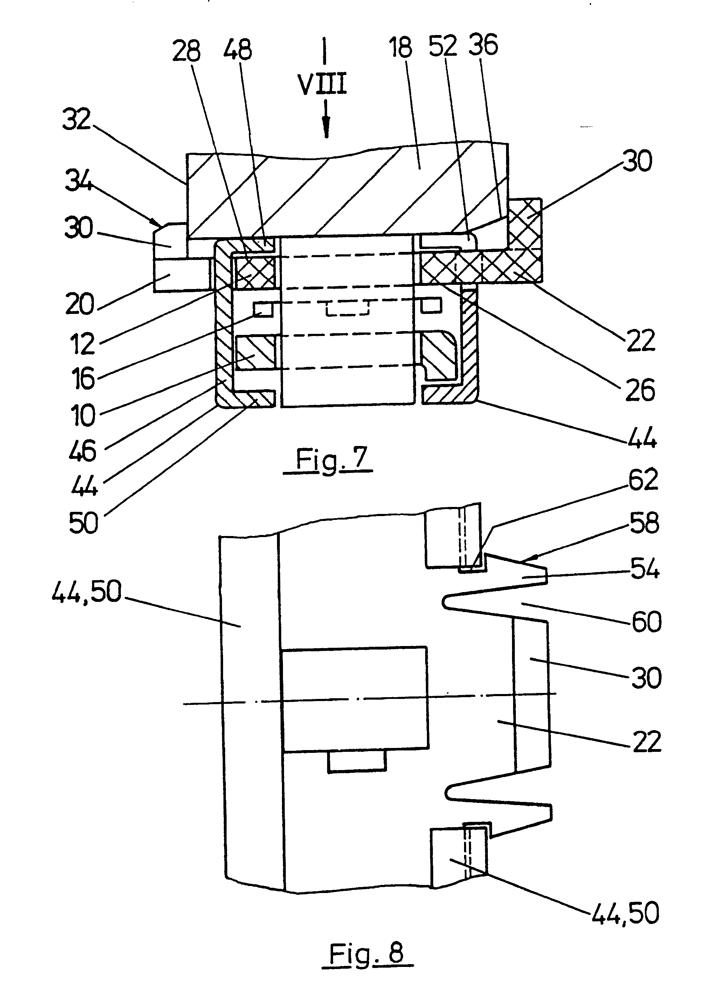

In Fig. 7 und 8 ist eine andere Ausführungsform von Rastzungen 54 für die Seitenscheiben 44 illustriert. Die Zungen 54 sitzen hier axial innen an den Fortsätzen 20, 22, von denen sie durch axiale Einschnitte 60 abgeteilt sind, die ein Einfedern der Zungen 54 ermöglichen. Die Einschnitte 60 haben einen sich nach außen weitenden, im wesentlichen dreieckigen Grundriß. Die Seitenscheibe 44 rastet in einer Hinterschneidung 62 hinter den schrägen Flanken 58 der Zungen 54 ein.

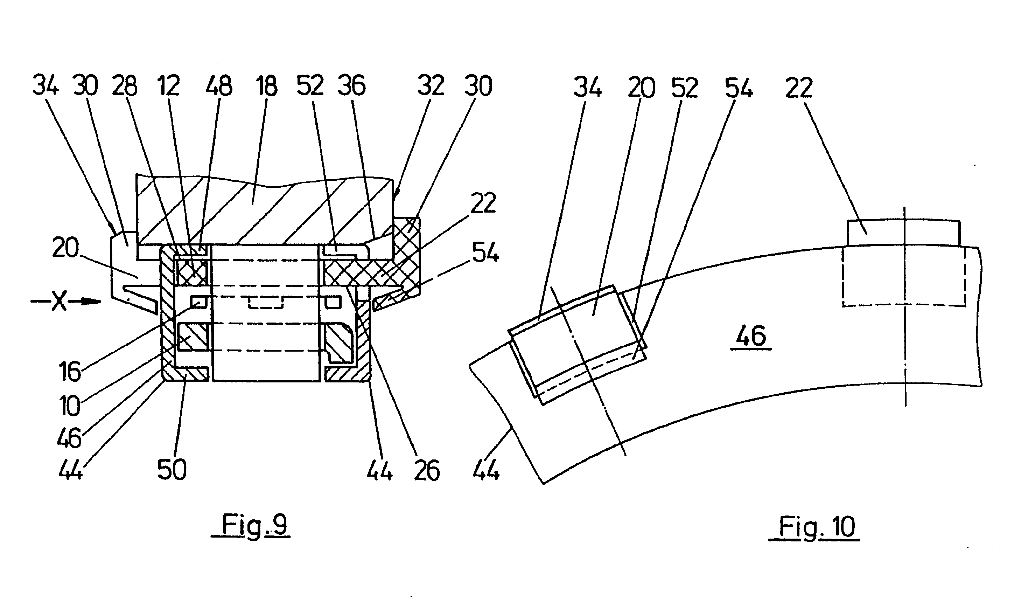

Bei dem Ausführungsbeispiel gemäß Fig. 9 und 10 ist axial außen an jedem Fortsatz 20, 22 eine radial nach innen davon wegfedernde Zunge 54 angeformt, die ähnlich wie in Fig. 5 und 6 von dem Fortsatz 20, 22 abgeteilt ist und sich mit ihrem freien Ende vor den Boden 46 der Seitenscheibe 44 legt.

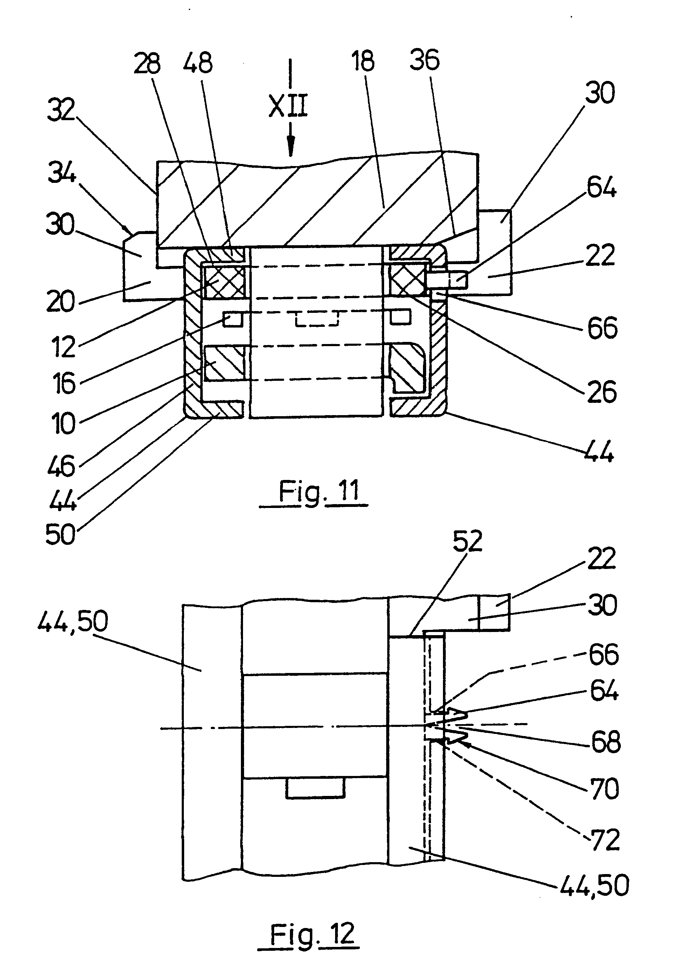

Fig. 11 und 12 zeigen eine Variante, bei der zur axialen Sicherung der Seitenscheiben dienende zungenförmige Halteelemente 64 separat von den Fortsätzen 20, 22 an den Außenkäfigring 12 angeformt sind. Die Halteelemente 64 stehen axial davon ab, und sie greifen durch eigens dafür vorgesehene Durchbrüche 66 im Boden 46 der Seitenscheibe 44 hindurch. In Fig. 11 und 12 ist eine Doppelzungenanordnung mit durch einen axialen Keilspalt 68 getrennten, in Umfangsrichtung aufeinander zu einfedernden Zungen illustriert, deren Kopf mit auf den Rand der Durchbrüche 66 treffenden schrägen Flanken 70 versehen ist, hinter denen sich die Seitenscheiben 44 aufnehmende Hinterschneidungen 72 befinden.

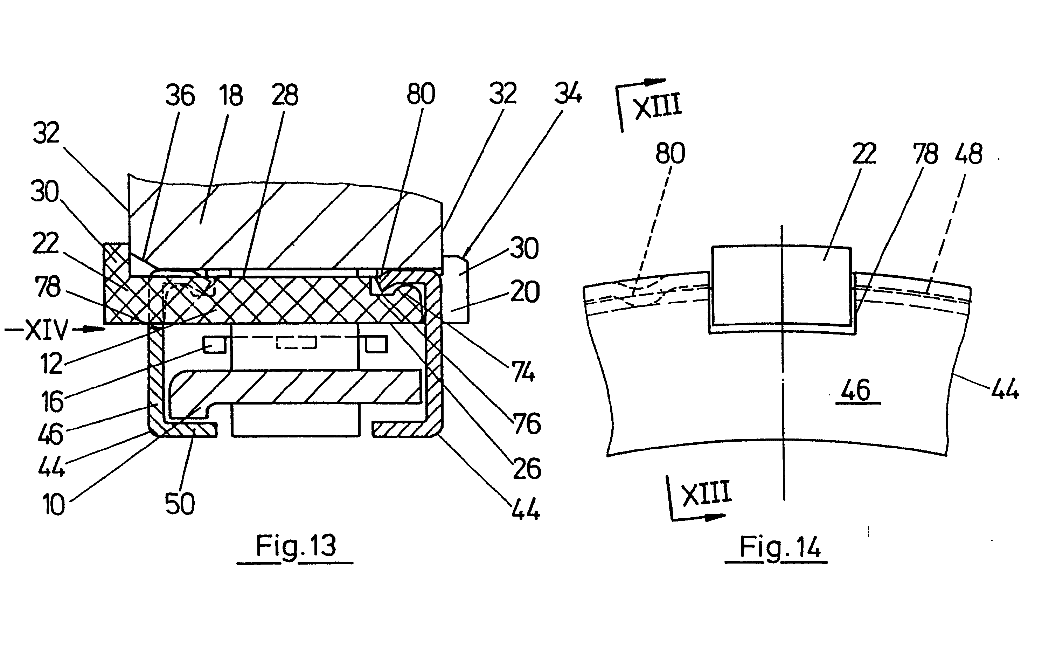

Fig. 13 und 14 zeigen als Haltestruktur für die Seitenscheiben 44 einen an der Stirnseite des Außenkäfigrings 12 umlaufenden Wulst 74, hinter dem sich axial nach innen versetzt eine Nut 76 befindet. Der Wulst 74 steht bezüglich des Nutgrunds radial nach außen vor, wobei er aber einen kleineren Außendurchmesser hat, als der Außenmantel 28 des Außenkäfigrings 12. Der Außenkäfigring 12 ist mit Ausnehmungen 78 für den Durchtritt der Fortsätze 20, 22 versehen. Die Ausnehmungen 78 unterbrechen sowohl den Wulst 74, als auch die Nut 76. Die äußeren Ringstege 48 der Seitenscheiben 44 greifen über den Wulst 74 hinweg. Sie sind mit mehreren, gleichmäßig über den Umfang der Seitenscheiben 44 verteilten Sicken 80 versehen, die rastend in der Nut 76 zu liegen kommen, wodurch die Seitenscheiben 44 an dem Außenkäfigring 12 axial fixiert sind. Zwei einander diametral gegenüberliegende Sicken 80 an jeder Seitenscheibe 44 genügen.

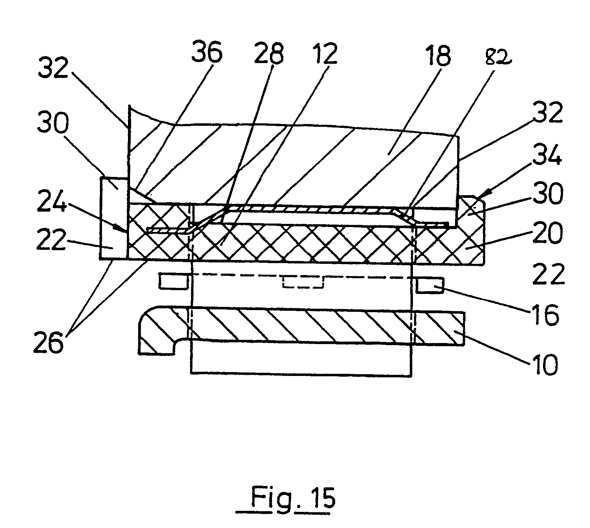

Bezugnehmend auf Fig. 15 bis 17, können statt der in Fig. 1 und 2 illustrierten, einstückig an den Außenkäfigring 12 angeformten Stege 38 auch den Reibschluß übernehmende Clips 82 aus Metall in das Kunststoffmaterial des Außenkäfigrings 12 eingebettet sein. Die vorzugsweise federnden Clips 82 erstrecken sich in axialer Richtung zwischen den Fenstern, die für die Klemmkörper in dem Außenkäfigring 12 ausgenommen sind, wobei Clips 82 zwischen allen Fenstern oder auch nur einem Teil der Fenster vorgesehen sein können. Die Clips 82 stehen in einer Höhe, die der der Stege 38 vergleichbar ist, über den Außenmantel 28 des Außenkäfigrings 12 hinaus. Sie sind für den Abbremseffekt ausgelegt und unterliegen weniger dem Verschleiß, als aus Kunststoff bestehende Stege 38, so daß sie eine längere Lebensdauer haben.

Gemäß Fig. 16 werden die Clips 82 als Teil eines kammartigen endlosen Bands mit einem ebenen durchgehenden Rücken 84 hergestellt. Die die Zinken des Kamms darstellenden Clips 82 haben einen ebenen, mit dem Außenring 18 in Berührung kommenden Anlageabschnitt 86, der über eine Rampe 88 von dem Rücken 84 abgewinkelt ist und sich parallel im Abstand dazu erstreckt. An ihrem freien Ende sind die Clips 22 in Richtung hin auf den Rücken 84 abgekröpft, wodurch eine zweite Rampe 90 und ein sich am Außenmantel 28 des Außenkäfigrings 12 lose abstützender Fuß 92 gebildet sind.

Bei der Herstellung des Außenkäfigrings 12 wird ein Stück Clipsband abgeschnitten, zu einem geschlossenen Ring gebogen und in die Spritzform für den Außenkäfigring 12 eingelegt. Der Rücken 84 des Bands wird mit Kunststoff umspritzt und dadurch in dem Außenkäfigring 12 verankert. Die Enden der Clips 82 bleiben frei. Nach dem Eingießen kann sich eine Nachbearbeitung der Clips 82 mit einem Kalibrierwerkzeug anschließen.

Statt eines Abschnitts Clipsband können auch einzelne davon abgeschnittene Clips 82, wie sie in Fig. 17 illustriert sind, in den Außenkäfigring 12 eingespritzt werden.

## Liste der Bezugzeichen

| 10 | Innenkäfigring | 52 | Ausnehmung |
|----|----------------|----|------------|
| 12 | Außenkäfigring | 54 | Zunge |
| 14 | Klemmkörper | 56 | Winkel |
| 16 | Feder | 58 | Flanke |
| 18 | Außenring | 60 | Einschnitt |
| 20 | niedriger Fortsatz | 62 | Hinterschneidung |
| 22 | hoher Fortsatz | 64 | Halteelement |
| 24 | Stirnfläche | 66 | Durchbruch |
| 26 | Innenmantel | 68 | Keilspalt |
| 28 | Außenmantel | 70 | Flanke |
| 30 | Nocken | 72 | Hinterschneidung |
| 32 | Stirnseite | 74 | Wulst |
| 34 | Fase | 76 | Nut |
| 36 | Erweiterung | 78 | Ausnehmung |
| 38 | Steg | 80 | Sicke |
| 40 | Rampenfläche | 82 | Clips |
| 42 | Zylindermantel | 84 | Kammrücken |
| 44 | Seitenscheibe | 86 | Anlageabschnitt |
| 46 | Boden | 88 | Rampe |
| 48 | äußerer Ringsteg | 90 | Rampe |
| 50 | innere Ringsteg | 92 | Fuß |

## Patentansprüche

1. Klemmkörperfreilauf mit einem Doppelkäfig, zu dem ein Innenkäfigring (10) vorzugsweise aus Metall, insbesondere Stahl, und ein Außenkäfigring aus Kunststoff gehört, an den elastisch verformbare Rastmittel zum axial gesicherten Einbau des Freilaufs in einen den Außenkäfigring (12) umgebenden Außenring (18) einstückig angeformt sind, dadurch gekennzeichnet, daß an den beiden Stirnflächen (24) des Außenkäfigrings (12) axial über den Außenring (18) vorstehende, wenigstens zum Teil als Rastelement ausgelegte Fortsätze (20, 22) mit an den Enden radial nach außen angeformten Nocken (30) angebracht sind, so daß ein Einpressen des Doppelkäfigs in den Außenring (18) unter elastischer Verformung des Kunststoff-Außenkäfigrings (12) mit Auslenkung der als Rastelement ausgelegten Fortsätze (20) nach innen möglich ist.

2. Klemmkörperfreilauf nach Anspruch 1, dadurch gekennzeichnet, daß die Fortsätze auf der einen Seite des Außenkäfigrings (12) eine geringere radiale Höhe haben als diejenigen (22) auf der Gegenseite, und daß beim Einpressen des Doppelkäfigs in den Außenring (18) die radial niedrigen Fortsätze (20) nach innen auslenkbar sind, während die radial höheren Fortsätze (22) einen axialen Anschlag bilden.

3. Klemmkörperfreilauf nach Anspruch 1 oder 2, dadurch gekennzeichnet, daß die radial niedrigen Fortsätze (20) mit einer Fase (34) und/oder der Innenmantel (26) des Außenrings (18) einsteckseitig mit einer als Anlaufschräge dienenden Erweiterung (36) versehen ist.

4. Klemmkörperfreilauf nach einem der Ansprüche 1 bis 3, dadurch gekennzeichnet, daß die Fortsätze (20, 22) auf beiden Seiten des Außenkäfigrings (12) in Umfangsrichtung versetzt sind.

5. Klemmkörperfreilauf nach einem der Ansprüche 1 bis 4, dadurch gekennzeichnet, daß an wenigstens einer Seite des Doppelkäfigs eine Seitenscheibe (44) angebracht ist, und daß die Fortsätze (20, 22) durch Ausnehmungen (42, 78) in der Seitenscheibe (44) hindurchragen.

6. Klemmkörperfreilauf nach Anspruch 5, dadurch gekennzeichnet, daß die Seitenscheibe (44) durch eine einstückig mit dem Außenkäfigring (12) ausgebildet Haltestruktur rastend in axialer Richtung gehalten ist.

7. Klemmkörperfreilauf nach Anspruch 6, dadurch gekennzeichnet, daß als Haltestruktur vorzugsweise zungenförmige Halteelemente (54) an die Fortsätze (20, 22) angeformt sind, wobei die Forstätze (20, 22) mitsamt den Halteelementen (54) durch die Ausnehmungen (52) in der Seitenscheibe (44) passen.

8. Klemmkörperfreilauf nach Anspruch 7, dadurch gekennzeichnet, daß die Fortsätze (20, 22) je zwei in Umfangsrichtung davon wegfedernde Zungen (54) tragen (Fig. 6 und 8).

9. Klemmkörperfreilauf nach Anspruch 7, dadurch gekennzeichnet, daß die Fortsätze (20, 22) je eine radial nach innen davon wegfedernde Zunge (54) tragen (Fig. 9).

10. Klemmkörperfreilauf nach Anspruch 8 oder 9, dadurch gekennzeichnet, daß die Zungen (54) axial außen an den Fortsätzen (20, 22) ansetzen (Fig. 6 und 9).

11. Klemmkörperfreilauf nach Anspruch 8 oder 9, dadurch gekennzeichnet, daß die Zungen (54) axial innen an den Fortsetzen (20, 22) ansetzen und durch Einschnitte (60) davon abgeteilt sind (Fig. 8).

12. Klemmkörperfreilauf nach Anspruch 6, dadurch gekennzeichnet, daß als Haltestruktur vorzugsweise zungenförmige Halteelemente (64) separat von den Fortsetzen (20, 22) an den Außenkäfigring (12) angeformt sind und durch ihnen eigens zugeordnete Durchbrüche (66) in der Seitenscheibe (44) hindurchgreifen (Fig. 12).

13. Klemmkörperfreilauf nach Anspruch 6, dadurch gekennzeichnet, daß als Haltestruktur ein an der Stirnseite des Außenkäfigrings (12) umlaufender, für den Durchtritt der Fortsätze (20, 22) unterbrochener nabenartiger Wulst (74) vorgesehen ist, hinter dem mehrere, vorzugsweise gleichmäßig über den Umfang der Seitenscheibe (44) verteilte Sicken (80) eingreifen (Fig. 13).

14. Klemmkörperfreilauf nach einem der Anspruch 1 bis 13, dadurch gekennzeichnet, daß in den Außenkäfigring (12) über dessen Außenmantel (28) vorstehende Clips (82) aus Metall eingebettet sind.

15. Klemmkörperfreilauf nach Anspruch 14, dadurch gekennzeichnet, daß die Clips (82) axial einseitig an dem Außenkäfigring (12) verankert und vorzugsweise axial anderseitig lose am Außenmantel (28) des Außenkäfigrings (12) abgestützt sind.

16. Klemmkörperfreilauf nach Anspruch 14 oder 15, dadurch gekennzeichnet, daß die Clips (82) Teil eines über den Umfang des Außenkäfigrings (12) durchgehend darin eigebetteten Clipsbands sind.

17. Klemmkörperfreilauf nach Anspruch 14 oder 15, gekennzeichnet durch einzeln in den Außenkäfigring (12) eingebettete Clips (82).

## Claims

1. Clamping element freewheel with a double cage, which includes an internal cage ring (10) preferably made of metal, in particular steel, and an external cage ring made of plastic, on which resiliently deformable catch means are integrally formed for axially secured installation of the freewheel in an external ring (18) surrounding the external cage ring (12), characterised in that there are, mounted on both front faces (24) of the external cage ring (12) and projecting axially over the external ring (18), extensions (20, 22) designed at least partially as a catch element having radially outwardly directed cams (30) formed on their ends, so that pressing of the double cage into the external ring (18) is possible with simultaneous resilient deformation of the plastic external cage ring (12) and inward deflection of the extensions (20) designed as a catch element.

2. Clamping element freewheel according to claim 1, characterised in that the extensions on one side of the external cage ring (12) are of a lower radial height than those (22) on the opposite side, and that on pressing of the double cage into the external ring (18) the radially lower extensions (20) are deflectable inwards while the radially higher extensions (22) form an axial stop.

3. Clamping element freewheel according to claim 1 or 2, characterised in that the radially lower extensions (20) are provided with a bevel (34) and/or the inner shell (26) of the external ring (18) is provided on its insert side with a widening (36) serving as a stop slope.

4. Clamping element freewheel according to one of claims 1 to 3, characterised in that the extensions (20, 22) on both sides of the external cage ring (12) are offset in a peripheral direction.

5. Clamping element freewheel according to one of claims 1 to 4, characterised in that a lateral disk (44) is mounted on at least one side of the double cage, and that the extensions (20, 22) project through recesses (52, 78) in the lateral disk (44).

6. Clamping element freewheel according to claim 5, characterised in that the lateral disk (44) is held lockingly in an axial direction by means of a retaining structure constructed as an integral part of the external cage ring (12).

7. Clamping element freewheel according to claim 6, characterised in that, as a retaining structure, tongue-shaped retaining elements (54) are preferably formed on the extensions (20, 22), with the extensions (20, 22) together with the retaining elements (54) fitting through the recesses (52) in the lateral disk (44).

8. Clamping element freewheel according to claim 7, characterised in that the extensions (20, 22) each carry two tongues (54) springing away therefrom in a peripheral direction (Figs. 6 and 8).

9. Clamping element freewheel according to claim 7, characterised in that the extensions (20, 22) each carry one tongue (54) springing radially inwards away therefrom (Fig. 9).

10. Clamping element freewheel according to claim 8 or 9, characterised in that the tongues (54) are axially externally positioned on the extensions (20, 22) (Figs. 6 and 9).

11. Clamping element freewheel according to claim 8 or 9, characterised in that the tongues (54) are axially internally positioned on the extensions (20, 22) and are separated from the latter by means of notches (60) (Fig. 8).

12. Clamping element freewheel according to claim 6, characterised in that, as a retaining structure, tongue-shaped retaining elements (64) are preferably formed separately from the extensions (20, 22) on the external cage ring (12) and engage through openings (66) in the lateral disk (44) which are specifically associated with said retaining elements (Fig. 12).

13. Clamping element freewheel according to claim 6, characterised in that, as a retaining structure, there is provided running round the front face of the external cage ring (12) a hub-like bead (74) which has breaks for the extensions (20, 22) to pass through and behind which a plurality of beads (80) engage which are preferably uniformly distributed over the periphery of the lateral disk (44) (Fig. 13).

14. Clamping element freewheel according to one of claims 1 to 13, characterised in that metal clips (82) are embedded in the external cage ring (12) and project over the latter's external shell (28).

15. Clamping element freewheel according to claim 14, characterised in that the clips (82) are axially braced at one side on the external cage ring (12) and are preferably axially supported at the other side loosely on the external shell (28) of the external cage ring (12).

16. Clamping element freewheel according to claim 14 or 15, characterised in that the clips (82) are part of a continuous band of clips extending over and embedded in the periphery of the external cage ring (12).

17. Clamping element freewheel according to claim 14 or 15, characterised by clips (82) which are individually embedded in the external cage ring (12).

## Revendications

1. Roue libre à corps de blocage avec une double cage dont fait partie une bague de cage intérieure (10), de préférence en métal, notamment en acier, et une bague de cage extérieure en matière plastique sur lesquelles sont formés, d'une seule pièce, des moyens d'arrêt déformables élastiquement pour le montage, bloqué axialement, de la roue libre, dans une bague extérieure (18) entourant la bague de cage extérieure (12), caractérisée en ce que des prolongements (20, 22) conçus au moins en partie comme éléments d'arrêt, dépassant axialement de la bague extérieure (18), sur les deux faces frontales (24) de la bague de cage extérieure (12) et présentant aux extrémités des cames (30) formées radialement vers l'extérieur, sont appliqués de manière à permettre de presser la double cage dans la bague extérieure (18), par déformation élastique de la bague de cage extérieure (12) en matière plastique, avec déviation vers l'intérieur des prolongements (20), conçus comme éléments d'arrêt.

2. Roue libre à corps de blocage selon la revendication 1, caractérisée en ce que les prolongements situés sur un côté de la bague de cage extérieure (12) ont une hauteur radiale inférieure aux prolongements (22) situés sur le côté opposé et en ce qu'en pressant la double cage dans la bague extérieure (18), les prolongements (20) radialement bas peuvent être déviés vers l'intérieur, tandis que les prolongements (22) radialement hauts forment une butée axiale.

3. Roue libre à corps de serrage selon la revendication 1 ou 2, caractérisée en ce que les prolongements (20) radialement bas sont pourvus d'un chanfrein (34) et/ou une enveloppe intérieure (26) de la bague extérieure (18) est pourvue, côté emboîtement, d'une partie élargie (36), servant de surface oblique d'entrée.

4. Roue libre à corps de blocage selon l'une des revendications 1 à 3, caractérisée en ce que les prolongements (20, 22) sont décalés périphériquement sur les deux côtés de la bague de cage extérieure (12).

5. Roue libre à corps de blocage selon l'une des revendications 1 à 4, caractérisée en ce qu'un flasque latéral (44) est placé sur au moins un côté de la double cage et en ce que les prolongements (20, 22) traversent le flasque latéral (44) par des évidements (52, 78).

6. Roue libre à corps de blocage selon la revendication 5, caractérisée en ce que le flasque latéral (44) est maintenu encliqueté axialement, par une structure de maintien formée d'une seule pièce avec la bague de cage extérieure (12).

7. Roue libre à corps de blocage selon la revendication 6, caractérisée en ce que des éléments de maintien (54), de préférence en forme de languettes, sont formés sur les prolongements (20, 22) pour servir de structures de maintien, les prolongements (20, 22) avec les éléments de maintien (54) s'ajustant à travers les évidements (52) du flasque latéral (44).

8. Roue libre à corps de blocage, selon la revendication 7, caractérisée en ce que des prolongements (20, 22) portent chacun deux languettes (54) s'éloignant périphériquement de ceux-ci de façon élastique (figs. 6 et 8).

9. Roue libre à corps de blocage selon la revendication 7, caractérisée en ce que les prolongements (20, 22) portent chacun une languette (54) s'éloignant radialement vers l'intérieur de ceux-ci, de manière élastique (fig. 9).

10. Roue libre à corps de blocage selon la revendication 8 ou 9, caractérisée en ce que les languettes (54) s'appliquent axialement à l'extérieur des prolongements (20, 22) (figs. 6 et 9).

11. Roue libre à corps de blocage selon la revendication 8 ou 9, caractérisée en ce que les languettes (54) s'appliquent axialement à l'intérieur des prolongements (20, 22) et sont séparées de ceux-ci par des entailles (60) (fig. 8).

12. Roue libre à corps de blocage selon la revendication 6, caractérisée en ce que des éléments de maintien (64), de préférence en forme de languettes, servant de structure de maintien, sont formés séparément des prolongements (20, 22) sur la bague de cage extérieure (12) et traversent le flasque latéral (44) par des ajours (66) qui leur sont spécialement destinés (fig. 12).

13. Roue libre à corps de blocage selon la revendication 6, caractérisée en ce qu'il est prévu un bourrelet (74) à la manière d'un moyeu, entourant le côté frontal de la bague de cage extérieure (12), interrompu pour le passage des prolongements (20, 22) et servant de structure de maintien, derrière lequel agissent plusieurs moulures (80), de préférence réparties uniformément sur le pourtour du flasque latéral (44) (fig. 13).

14. Roue libre à corps de blocage selon l'une des revendications 1 à 13, caractérisée en ce que des clips (82) en métal sont noyés dans la bague de cage extérieure (12) et dépassent de son enveloppe extérieure (28).

15. Roue libre à corps de blocage selon la revendication 14, caractérisée en ce que les clips (82) sont ancrés axialement sur un côté de la bague de cage extérieure (12) et prennent appui, de préférence axialement sur l'autre côté, de manière libre, contre l'enveloppe (28) de la bague de cage extérieure (12).

16. Roue libre à corps de blocage selon la revendication 14 ou 15, caractérisée en ce que les clips (82) font partie d'une bande de clips noyés sur tout le pourtour de la bague de cage extérieure (12).

17. Roue libre à corps de blocage selon la revendication 14 ou 15, caractérisée en ce que des clips (82) sont noyés individuellement dans la bague de cage extérieure (12).

EP 0 370 119 B1

Fig. 1

Fig. 2

Fig. 3

Fig. 4

Fig.5

Fig.6

Fig. 7

Fig. 8

Fig. 9

Fig. 10

Fig. 11

Fig. 12

Fig.13

Fig.14

Fig. 15

Fig. 16

Fig.17